# EUROPÄISCHE PATENTSCHRIFT

(11) **EP 1 984 205 B1**
(45) Veröffentlichungstag und Bekanntmachung des Hinweises auf die Patenterteilung: **25.01.2012**
(21) Anmeldenummer: 07703418.9
(22) Anmeldetag: 12.02.2007
(51) Int. Cl.: B60N 2/015

(54) **KRAFTFAHRZEUG MIT EINER VORRICHTUNG ZUR BEFESTIGUNG EINER RÜCKENLEHNE**
MOTOR VEHICLE WITH A DEVICE FOR ATTACHING A BACKREST
VÉHICULE AUTOMOBILE ÉQUIPÉ D'UN DISPOSITIF DE FIXATION D'UN DOSSIER

(30) Priorität: 17.02.2006 DE 102006007374
(43) Veröffentlichungstag der Anmeldung: 29.10.2008
(73) Patentinhaber: Bayerische Motoren Werke Aktiengesellschaft, 80809 München (DE)
(72) Erfinder: TIETJE, Peter, 85777 Fahrenzhausen (DE)
(74) Vertreter: Schernhammer, Herbert
(86) Internationale Anmeldenummer: PCT/EP2007/001189
(87) Internationale Veröffentlichungsnummer: WO 2007/093349

(56) Entgegenhaltungen:
- EP-A- 1 241 046
- DE-A1- 10 054 586
- DE-A1- 19 518 393

## Beschreibung

Die Erfindung betrifft ein Kraftfahrzeug mit einer Vorrichtung zur Befestigung einer Rückenlehne eines Fahrzeugsitzes, insbesondere nach dem Oberbegriff des Anspruchs 1 (EP 1 241 046 A1).

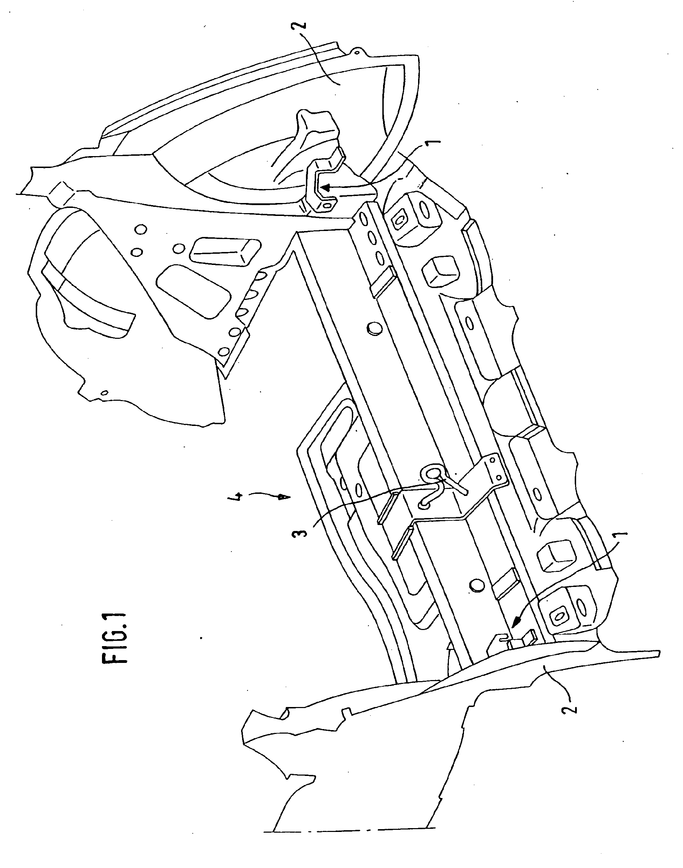

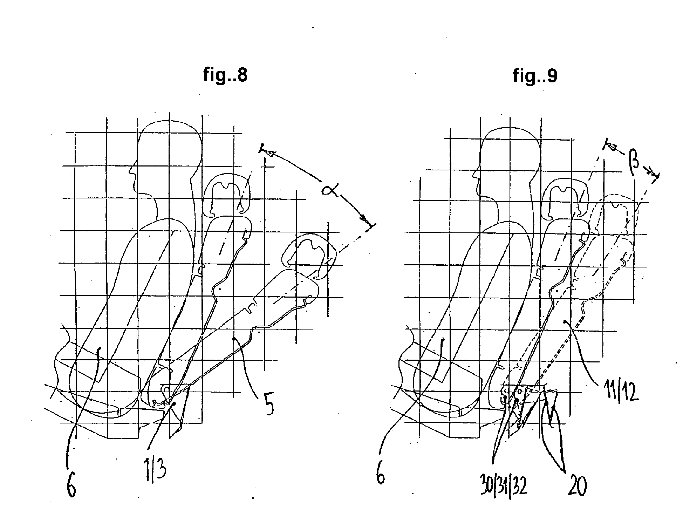

Wie aus Fig. 1 hervorgeht, sind die bekannten Rückenlehnen eines nicht dargestellten Rücksitzes für ein Kraftfahrzeug über Lehnenlagerbleche 1 fahrzeugaußenseitig im Bereich der Radhäuser 2 sowie über ein Mittellager 3 an die in ihrer Gesamtheit mit 4 bezeichneten Heckstruktur eines Kraftfahrzeuges angebunden. Die bei einem Heckcrash auf einen Insassen wirkende Kraft wird über die Rückenlehne in die Heckstruktur eingeleitet. Die Folge ist, wie aus Fig. 8 näher hervorgeht, eine relativ starke Deformation der Lehnenlagerbleche 1 und des Mittellagers 3, mit einer Folge einer starken Änderung des Winkels α der Rückenlehne 5 von etwa 30°. Somit treten für den Insassen 6 relativ hohe Belastungen auf, da die Körperverlagerung im Oberkörper und insbesondere im Kopfbereich stattfindet.

Aufgabe der Erfindung ist es, die Vorrichtung zur Befestigung der Rückenlehne eines Kraftfahrzeugsitzes so zu gestalten, dass sich bei einem Heckaufprall reduzierte Belastungen für einen Insassen ergeben.

Diese Aufgabe wird durch eine Vorrichtung mit den Merkmalen des Anspruches 1 gelöst.

Kerngedanke der Erfindung ist es hierbei, die Rückenlehne eines Kraftfahrzeugsitzes so über einen Querträger an die Heckstruktur des Kraftfahrzeugs anzubinden, dass bei einem Heckcrash die einwirkenden Kräfte überwiegend im Querträger abgebaut werden. Erfindungswesentlich ist hierbei, dass der Energie abbauende Querträger so zwischen Karosserie des Kraftfahrzeuges und Aufnahme der Rückenlehne zwischengeschaltet ist, dass ein beträchtlicher Teil der Crashenergie abgebaut werden kann. Damit reduziert sich der Winkel, um den sich die Rückenlehne bei einem Heckaufprall entgegen der Fahrtrichtung verlagert. Insbesondere bei Fahrzeugen mit kompakten Abmessungen wird damit vermieden, dass der Kopf eines Fondpassagiers in Kontakt mit einem hinter der Rücksitzanlage befindlichen Heckfensterrahmen gerät.

Zwar ist aus der DE 100 54 586 A1 ein quer über die Breite des Fahrzeuges reichender Querträger zur Aufnahme eines Kraftfahrzeugsitzes bekannt. Im Unterschied zur vorliegenden Erfindung nimmt der bekannte Querträger jedoch Sitzschienen zur Befestigung der gesamten Rücksitzanlage auf. Eine Anbindung lediglich der Rückenlehne mit einer vorteilhaften Ausgestaltung im Sinn einer günstigen Energieaufnahme bei einem Heckcrash geht aus der bekannten Anordnung nicht hervor.

Des Weiteren ist aus der EP 1 241 046 A1 ein Fahrzeugsitz mit einer umklappbaren Rückenlehne bekannt, die einen Tragrahmen mit zwei nach unten abkragenden Befestigungsabschnitten aufweist. Mit diesen Befestigungsabschnitten, an denen Scharniere für die Umklappfunktion vorgesehen sind, wird die Rückenlehne formschlüssig in karosseriefeste Aufnahmen des Fahrzeugs eingesteckt. In der Gebrauchslage der Rückenlehne sind die Scharniere in die Aufnahmen mit eingesteckt, während in der Nichtgebrauchslage der Rückenlehne nur der Bereich der Befestigungsabschnitte unterhalb der Scharniere in die Aufnahmen eingesteckt ist, so dass die freiliegenden Scharniere ein Umklappen der Rückenlehne ermöglichen. Somit sind die Scharniere in der Gebrauchslage der Rückenlehne nicht im Kraftfluss und können dementsprechend schwach dimensioniert werden. Die beiden Aufnahmen sind durch einen Querträger miteinander verbunden, in dessen Inneren verstellbare Stangen zur formschlüssigen Fixierung der Befestigungsabschnitte des Tragrahmens der Rückenlehne geführt sind. Dem Querträger kommt nicht die Aufgabe zu, in die Rückenlehne eingeleitete Kräfte weiterzuleiten oder zu absorbieren.

Gemäß der Erfindung verlaufen vordere und hintere Begrenzungswand des Querträgers etwa parallel zueinander in annähernd vertikalen Querebenen des Fahrzeugs. Durch diese Ausgestaltung des Querträgers kommt es bei einem Heckaufprall zu einer parallelogrammartigen Verwindung des Querträgers, im Wesentlichen über seine gesamte Erstreckung in Fahrzeugquerrichtung, und damit zu einem entsprechend hohen Energieabbau im Querträger. Damit verringert sich der Anteil an Crashenergie, die von den Aufnahmen der Rückenlehne abgebaut werden muss, mit dem Effekt einer geringeren Verformung der Aufnahmen und damit einer geringeren Lehnenwinkeländerung. Das Ausmaß der Lehnenwinkeländerung wird auch dadurch reduziert, dass sich der Querträger bei einem Fahrzeugcrash durch die parallelogrammartige Verwindung vornehmlich in Fahrzeuglängsrichtung verschiebt. Eine Verdrehung des Querträgers findet nur in geringem Umfang statt.

Die als Lagerböcke ausgebildeten Aufnahmen der Rückenlehne sind bevorzugt als Schwenklager gestaltet, um die Rückenlehnen der Fondsitzanlage umklappen zu können und damit den kofferraumseitigen Laderaum in den Bereich der Rücksitzanlage zu erweitern. Hierbei ist es besonders vorteilhaft, bei einer zweigeteilten Rückenlehne eines Fondsitzes neben den beiden außenseitigen Schwenklagern ein Mittellager vorzusehen, das die Abstützung der beiden Rückenlehnenteile gemeinsam übernimmt.

Auch wenn die Erfindung vornehmlich in Verbindung mit Rückenlehnen von Rücksitzen beschrieben ist, kann die Vorrichtung grundsätzlich auch an Vordersitzen von Kraftfahrzeugen eingesetzt werden.

Vorteilhafte Ausgestaltungen der Erfindung sind Gegenstand von Unteransprüchen.

Ein mögliches Ausführungsbeispiel der Erfindung ist in der Zeichnung dargestellt und wird nachfolgend näher beschrieben. Es zeigt:
- Fig. 1: eine perspektivische Darstellung des Heckbereiches eines Kraftfahrzeuges, mit Vorrichtungen zur Befestigung einer Rückenlehne eines Rücksitzes nach dem Stand der Technik,
- Fig. 2: eine perspektivische Ansicht auf eine erfindungsgemäße Vorrichtung zur Befestigung einer Rückenlehne eines Rücksitzes, in Blickrichtung schräg von außerhalb des Fahrzeuges, entgegen der Fahrtrichtung,
- Fig. 3: eine der Fig. 2 entsprechende Darstellung, mit Blickrichtung von innerhalb des Fahrzeuges,
- Fig. 4: eine der Fig. 2 entsprechende Darstellung, in Blickrichtung schräg von außerhalb des Fahrzeuges, in Fahrtrichtung, mit zwei Rückenlehnenteilen,
- Fig. 5: eine perspektivische Darstellung eines erfindungsgemäßen Querträgers,
- Fig. 6: eine Explosionsdarstellung des Querträgers von Fig. 5,
- Fig. 7: einen Vertikalschnitt entsprechend der in Fig. 5 skizzierten Schnittverlaufslinie VII-VII,
- Fig. 8: eine schematische Darstellung der Rückverlagerung einer Rückenlehne nach dem Stand der Technik und
- Fig. 9: eine der Fig. 8 entsprechende Darstellung der Rückverlagerung der Rückenlehne bei einer erfindungsgemäßen Ausführungsform.

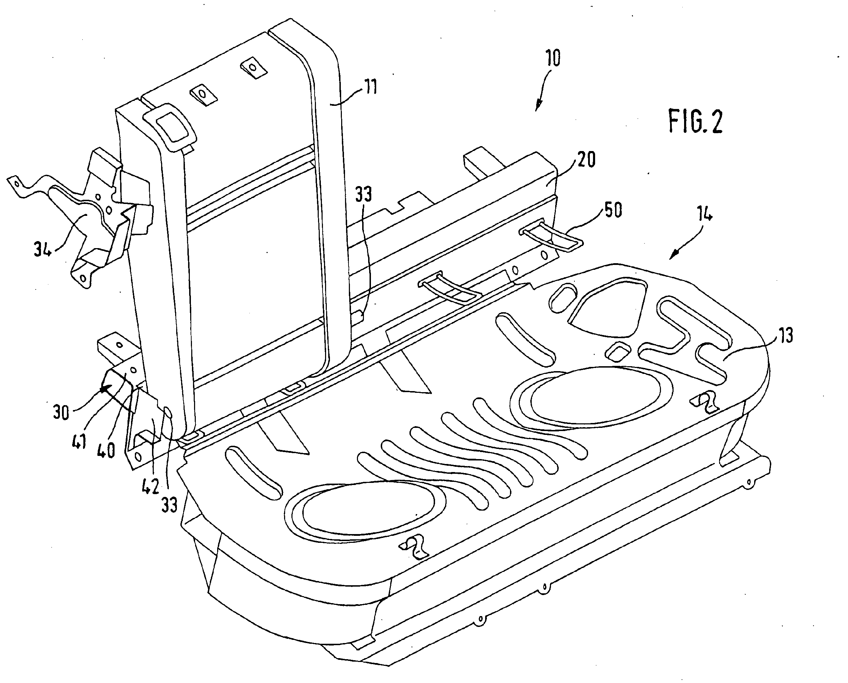

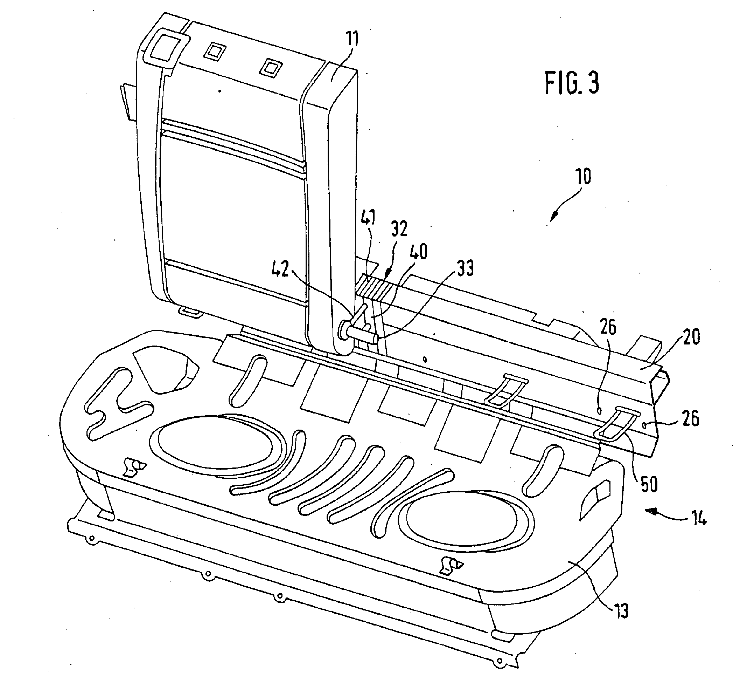

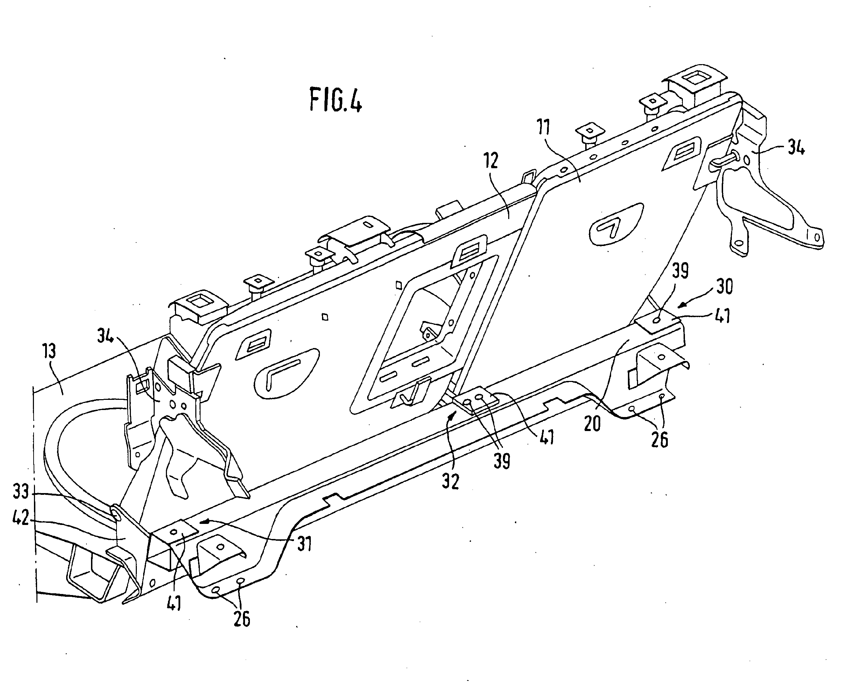

Die Fig. 2 bis 4 zeigen eine in ihrer Gesamtheit mit 10 bezeichnete Rücksitzanlage eines Kraftfahrzeuges, von der lediglich eine erste Rückenlehne 11 sowie eine zweite Rückenlehne 12 (Fig. 4) dargestellt sind. Das nicht dargestellte Sitzkissen der Rücksitzanlage 10 stützt sich auf einem Bodenblech 13 der Heckstruktur 14 des Kraftfahrzeuges ab.

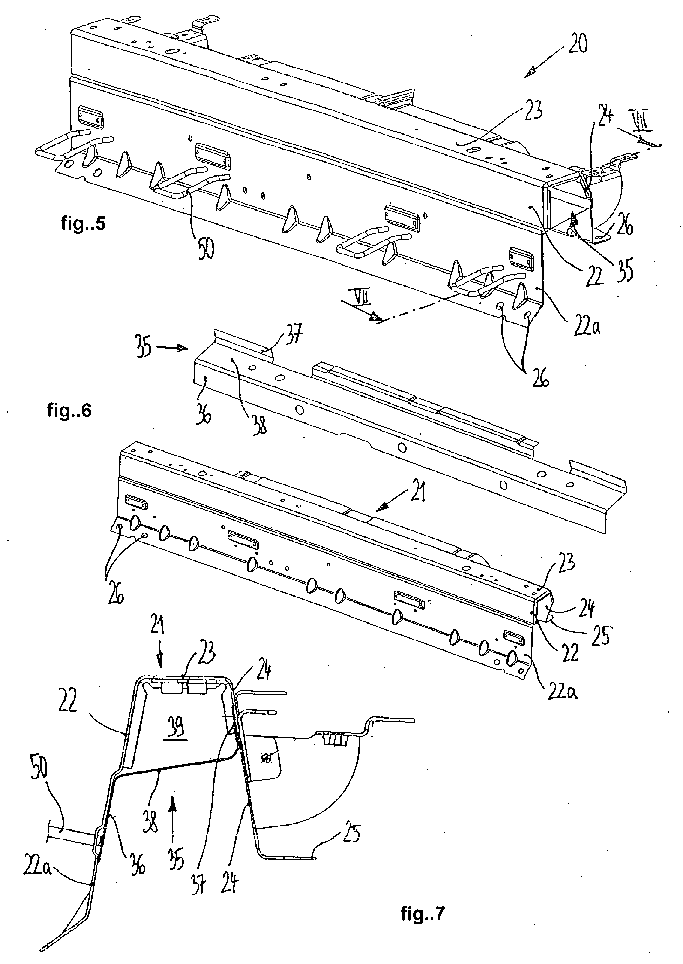

Erfindungsgemäß ist zwischen den beiden nicht dargestellten hinteren Radhäusem der Heckstruktur 14 ein Querträger 20 vorgesehen. Wie insbesondere aus den Fig. 5 bis 7 näher hervorgeht, besteht der Querträger 20 im Wesentlichen aus einem U-förmigen Profil 21, mit einer vorderen Begrenzungswand 22, einem Steg 23 sowie einer hinteren Begrenzungswand 24. Vordere und hintere Begrenzungswand 22 bzw. 24 erstrecken sich in etwa in einer vertikalen Querebene des Fahrzeugs und sind etwa parallel zueinander angeordnet. Der die beiden Begrenzungswände 22 und 24 verbindende Steg 23 erstreckt sich in etwa in einer horizontalen Ebene.

Die vordere Begrenzungswand 22 erstreckt sich über den unteren Endabschnitt 25 der hinteren Begrenzungswand 24 nach unten in einem unteren Abschnitt 22a weiter fort. Somit ist die vordere Begrenzungswand 22 deutlich größer als die hintere Begrenzungswand 24. Der untere Abschnitt 22a der vorderen Begrenzungswand 22 folgt einer Stufe im Bodenblech 13 der Heckstruktur 14 des Kraftfahrzeuges, wodurch eine besonders günstige Anlage mit großer Fläche zwischen Querträger 20 und Bodenblech 13 erreicht wird. Der Querträger 20 weist Durchgangsöffnungen 26 auf, zur Schraubbefestigung des Querträgers 20 an der Heckstruktur 14 des Kraftfahrzeuges.

Wie insbesondere aus den Fig. 6 und 7 hervorgeht, ist der Querträger 20 durch ein Verstärkungsprofil 35 im Inneren des Profils 21 versteift. Das Verstärkungsprofil 35 hat eine Z-ähnliche Form mit Schenkeln 36 und 37, die an der vorderen bzw. hinteren Begrenzungswand 22 bzw. 24 des Querträgers 20 anliegen sowie einem Verbindungssteg 38. Durch das Verstärkungsprofil 35 wird das nach unten offene, U-förmige Profil 21 des Querträgers 20 geschlossen. Somit entsteht ein widerstandsfähiger, geschlossener Querschnitt 39, durch den der Querträger 20 in der Lage ist, in hohem Maße Energie durch Verformung abzubauen.

Selbstverständlich kann der geschlossene Querschnitt des Querträgers 20 auch auf andere Weise, zum Beispiel durch ein Profil mit geschlossenem Querschnitt, bevorzugt mit rechteckförmigem Querschnitt, realisiert werden.

Die Rückenlehnen 11 und 12 sind asymmetrisch geteilt und über fahrzeugaußenseitig im Bereich der Radhäuser angeordnete Aufnahmen 30 und 31 sowie über eine mittige Aufnahme in Form eines Lehnenmittellagers 32 an den Querträger 20 angebunden. Die Aufnahmen 30 bis 32 weisen Schwenkzapfen 33 auf, durch die ein Umlegen der Rückenlehnen 11 und 12 aus der dargestellten in etwa vertikalen Gebrauchslage in eine horizontale Ablagestellung auf der Oberseite des Sitzkissens der Rücksitzanlage 10 möglich ist. Hierdurch wird eine Durchlademöglichkeit vom Gepäckraum in den Innenraum des Kraftfahrzeuges ermöglicht. Die Rückenlehnen 11 und 12 sind in ihrer aufrechten Lage durch Verriegelungen 34 am Aufbau des Kraftfahrzeuges gesichert.

Die fahrzeugaußenseitigen Aufnahmen 30 und 31 sind in etwa L-förmig, mit einem ersten Schenkel 40, der an der vorderen Begrenzungswand 22, 22a des Querträgers 20 anliegt sowie einem zweiten Schenkel 41, zur Anlage am Steg 23 des Querträgers 20. Vom ersten Schenkel 40 der Aufnahmen 30 und 31 steht eine Lasche 42 ab, die den Schwenkzapfen 33 trägt.

Die Lasche 42 des Mittellehnenlagers 32 trägt zu beiden Seiten jeweils einen Schwenkzapfen 33, an dem sowohl die erste bzw. die zweite Rückenlehne 11 bzw. 12 an ihrer der Fahrzeugmittenebene zugewandten Innenseite gelagert sind.

Die Aufnahmen 30, 31 und 32 weisen Durchgangsbohrungen 39 auf, die von nicht dargestellten Schrauben zur Befestigung der Aufnahmen 30, 31 und 32 am Querträger 20 durchsetzt sind.

Am Querträger, der bevorzugt als ein tiefgezogenes Blechbauteil ausgebildet ist, können noch weitere Anbauteile vorgesehen sein, wie beispielsweise die vier abgebildeten ISOFIX-Anbindungen 50 zur Fixierung eines Kindersitzes auf der Rücksitzanlage 10.

Fig. 9 erläutert die vorteilhafte Auswirkung der erfindungsgemäßen Ausgestaltung des Querträgers 20 anschaulich. Die mit durchgezogenen Linien dargestellten Querträger 20 und Rückenlehnen 11 bzw. 12 zeigen den Ausgangszustand im normalen Fahrbetrieb. Hier befindet sich der Insasse 6 in einer im Wesentlichen aufrechten Sitzhaltung. Bei einem Heckaufprall wird in Folge der Trägheitskraft des Insassen 6 eine entgegen der Fahrtrichtung gerichtete Kraft auf die Rückenlehnen 11 und 12 ausgeübt. Unter Einwirkung dieser Kraft verformt sich der Querträger 20, wie mit gestrichelten Linien dargestellt. Mit dieser parallelogrammartigen Verformung des Querträgers 20 ist ein nur relativ gering ausgeprägtes Verschwenken der Aufnahmen 30 bis 32 verbunden, wie anhand der strichlierten Linien dargestellt, mit der Folge einer Verschwenkung der Rückenlehnen 11 und 12 entgegen der Fahrtrichtung um einen Winkel β von nur etwas mehr 10 °.

Wie unschwer im Vergleich mit Fig. 8 zu erkennen ist, ergibt sich durch die parallelogrammartige Verformung des Querträgers 20 (anstelle der Verformung der Aufnahmen 1 und 3) und den hierdurch erreichten Energieabbau ein deutlich geringerer Verschwenkwinkel β der Rückenlehne 11, 12 im Vergleich zum Verschwenkwinkel α gemäß einer Rückenlehnenanbindung nach dem Stand der Technik laut Fig. 8.

## Patentansprüche

1. Kraftfahrzeug mit einer Vorrichtung zur Befestigung einer Rückenlehne eines Kraftfahrzeugsitzes, mit einem wenigstens über einen Teil der Breite des Kraftfahrzeuges reichenden Querträger (20), der an der Heckstruktur (14) des Kraftfahrzeuges angeordnet ist und eine vordere und eine hintere Begrenzungswand (22 bzw. 24) aufweist, die jeweils etwa in einer vertikalen Querebene des Fahrzeugs verlaufen, mit einem etwa horizontal verlaufenden Steg (23) zwischen vorderer und hinterer Begrenzungswand (22, 24), mit wenigstens einer Aufnahme (30, 31, 32) zur Befestigung der Rückenlehne (11, 12) an ihrem unteren Endabschnitt, **dadurch gekennzeichnet dass** der Querträger (20) so zwischen Heckstruktur (14) und Aufnahme der Rückenlehne (11, 12) zwischengeschaltet ist, dass ein Teil der Energie, die bei einem Heckcrash einwirkt, im Querträger (20) durch parallelogrammartige Verwindung abgebaut wird.

2. Kraftfahrzeug nach Anspruch 1,
**dadurch gekennzeichnet, dass** der Querträger (20) als ein nach unten offenes U-förmiges Profil (21) ausgebildet ist.

3. Kraftfahrzeug nach Anspruch 1,
**dadurch gekennzeichnet, dass** der Querträger (20) als ein geschlossenes Profil mit rechteckförmigen Querschnitt ausgebildet ist.

4. Kraftfahrzeug nach einem der vorgenannten Ansprüche,
**dadurch gekennzeichnet, dass** im Inneren des Querträgers (20) ein Verstärkungsprofil (35) angeordnet ist.

5. Kraftfahrzeug nach einem der vorgenannten Ansprüche,
**dadurch gekennzeichnet, dass** die vordere Begrenzungswand (22) gegenüber der hinteren Begrenzungswand (24) nach unten verlängert ist und mit diesem Verlängerungsabschnitt (22a) an einer Stufe der Heckstruktur (14) anliegt.

6. Kraftfahrzeug nach einem der vorgenannten Ansprüche,
**dadurch gekennzeichnet, dass** die Aufnahme (30 bis 32) als etwa L-förmiger Lagerblock ausgebildet ist, dessen erster Schenkel (40) etwa vertikal verläuft, und an der vorderen Begrenzungswand (22) anliegt und dessen zweiter Schenkel (41) etwa horizontal verläuft und am Steg (23) des Querträgers (20) anliegt.

7. Kraftfahrzeug nach einem der vorgenannten Ansprüche,
**dadurch gekennzeichnet, dass** die Aufnahme (30 bis 32) einen Schwenkzapfen (33) für ein Schwenklager der Rückenlehne (11, 12) aufweist.

8. Kraftfahrzeug nach Anspruch 7,
**dadurch gekennzeichnet, dass** die mittlere Aufnahme (32) als Lehnenmittellager für zwei benachbarte Rückenlehnenabschnitte (11, 12) ausgebildet ist.

## Claims

1. A motor vehicle with a device for fastening a backrest of a motor vehicle seat, with a crossmember (20) which extends at least over a part of the width of the motor vehicle and is arranged on the rear structure (14) of the motor vehicle and has a front and a rear boundary wall (22 or 24), which in each case extend approximately in a vertical transverse plane of the vehicle, with an approximately horizontally extending web (23) between the front and rear boundary wall (22, 24), with at least one receiver (30, 31, 32) for fastening the backrest (11, 12) to its lower end portion, **characterised in that** the crossmember (20) is connected between the rear structure (14) and the receiver of the backrest (11, 12) in such a way that some of the energy, which acts during a rear crash, is reduced in the crossmember (20) by parallelogram-like twisting.

2. A motor vehicle according to claim 1,
**characterised in that** the crossmember (20) is configured as a downwardly open U-shaped profile (21).

3. A motor vehicle according to claim 1,
**characterised in that** the crossmember (20) has a closed profile with a rectangular cross-section.

4. A motor vehicle according to any one of the preceding claims,
**characterised in that** a reinforcement profile (35) is arranged in the interior of the crossmember (20).

5. A motor vehicle according to any one of the preceding claims,
**characterised in that** the front boundary wall (22) is extended downwardly with respect to the rear boundary wall (24) and rests with this extension portion (22a) on a step of the rear structure (14).

6. A motor vehicle according to any one of the preceding claims,
**characterised in that** the receiver (30 to 32) is configured as an approximately L-shaped bearing block, the first leg (40) of which extends approximately vertically and rests on the front boundary wall (22) and the second leg (41) of which extends approximately horizontally and rests on the web (23) of the crossmember (20).

7. A motor vehicle according to any one of the preceding claims,
**characterised in that** the receiver (30 to 32) has a pivot pin (33) for a pivot bearing of the backrest (11, 12).

8. A motor vehicle according to claim 7,
**characterised in that** the central receiver (32) is configured as a backrest centre bearing for two adjacent backrest portions (11, 12).

## Revendications

1. Véhicule automobile équipé d'un dispositif de fixation du dossier d'un siège (1) comportant : .
- une traverse (20) occupant au moins une partie de la largeur du véhicule, installée sur la structure arrière (14) du véhicule et ayant une paroi avant et une paroi arrière (22, 24) dirigées chacune sensiblement dans un plan transversal vertical du véhicule,
- une âme (23) sensiblement horizontale entre la paroi avant et la paroi arrière (22, 24),
- au moins un moyen de réception (30, 31, 32) pour fixer le dossier (11, 12) par son segment d'extrémité inférieure,
véhicule **caractérisé en ce que**
la traverse (20) est interposée entre la structure arrière (14) et le moyen de réception du dossier (11, 12) pour qu'une partie de l'énergie appliquée en cas de choc arrière soit absorbée par la déformation en forme de parallélogramme de la traverse (20).

2. Véhicule automobile selon la revendication 1,
**caractérisé en ce que**
la traverse (20) a un profil (21) en forme de U ouvert vers le bas.

3. Véhicule automobile selon la revendication 1,
**caractérisé en ce que**
la traverse (20) est un profil fermé de section rectangulaire.

4. Véhicule automobile selon l'une des revendications précédentes,
**caractérisé par**
un profilé de renforcement (35) à l'intérieur de la traverse (20).

5. Véhicule automobile selon l'une des revendications précédentes,
**caractérisé en ce que**
la paroi avant (22) est prolongée vers le bas par rapport à la paroi arrière (24) et ce segment de prolongement (22a) s'applique contre un épaulement de la structure arrière (14).

6. Véhicule automobile selon l'une des revendications précédentes,
**caractérisé en ce que**
le moyen de réception (30-32) est un bloc palier sensiblement en forme de L dont la première branche (40) est dirigée sensiblement verticalement et s'applique contre la paroi avant (22) et la seconde branche (41) est sensiblement horizontale et s'applique contre l'âme (23) de la traverse (20).

7. Véhicule automobile selon l'une des revendications précédentes,
**caractérisé en ce que**
le moyen de réception (30-32) comporte un goujon pivotant (33) pour le palier pivotant du dossier (11, 12).

8. Véhicule automobile selon la revendication 7,
**caractérisé en ce que**
le moyen de réception médian (32) est un palier de dossier pour deux segments de dossier arrière (11, 12), voisins.
